# EUROPÄISCHE PATENTSCHRIFT

(11) **EP 1 240 712 B1**
(45) Veröffentlichungstag und Bekanntmachung des Hinweises auf die Patenterteilung: **24.09.2003**
(21) Anmeldenummer: 00993668.3
(22) Anmeldetag: 13.12.2000
(51) Int. Cl.: H02P 7/632, H02P 7/622

(54) **VERFAHREN ZUM BETRIEB VON ASYNCHRONMOTOREN UND ZUGEHÖRIGE EINRICHTUNG**
METHOD FOR OPERATING ASYNCHRONOUS MOTORS AND CORRESPONDING DEVICE
PROCEDE POUR FAIRE FONCTIONNER DES MOTEURS ASYNCHRONES, ET DISPOSITIF CORRESPONDANT

(30) Priorität: 23.12.1999 DE 19962667
(43) Veröffentlichungstag der Anmeldung: 18.09.2002
(73) Patentinhaber: SIEMENS AKTIENGESELLSCHAFT, 80333 München (DE)
(72) Erfinder: GRIEPENTROG, Gerd, 91468 Gutenstetten (DE); JOHNSON, Lynn, 53593 Verona, Wisconsin (US); RUNGGALDIER, Diethard, 96135 Stegaurach (DE)
(86) Internationale Anmeldenummer: DE0004444
(87) Internationale Veröffentlichungsnummer: WO01048908

(56) Entgegenhaltungen:
- EP-A- 0 408 045
- EP-A- 0 512 372
- US-A- 4 176 306
- US-A- 4 461 985
- US-A- 4 791 341

## Beschreibung

Die Erfindung betrifft ein Verfahren und eine zugehörige Einrichtung zum Auffinden von Zündzeitpunkten von zwei- oder dreiphasigen Drehstromstellern zum Betrieb von Asynchronmotoren, wobei die Drehstromsteller an ein Drehstromnetz ohne Verbindung der Sternpunkte von Ständerwicklung des Asynchronmotors und speisenden Netzes angeschlossen sind und die wenigstens zwei Paare antiparallel geschalteter Thyristoren umfassen, die zu vorbestimmbaren Zeitpunkten gezündet werden.

Bei verschiedenen Antriebsaufgaben ist es erwünscht, einen Asynchronmotor mit einer im Vergleich zur Nenndrehzahl niedrigeren Drehzahl und dabei verschiedenen Drehrichtungen zu betreiben, ohne die Drehrichtung des speisenden Netzes zu ändern. Hierzu können kostengünstig herkömmliche Drehstrom-. steller, wie beispielsweise elektronische Motorschaltgeräte oder sogenannte Sanftstarter, mit zusätzlichen Funktionalitäten versehen werden. Potentielle Anwendungsfälle sind beispielsweise bei der Positionierung von Transportgütern oder bei elektrisch betriebenen Toren gegeben.

Aus der US 4 791 341 A, der US 4 524 361 A und der US 4 461 985 A ist es bereits bekannt, einen Drehstromsteller mit insgesamt fünf Paaren antiparalleler Thyristoren auszurüsten. Damit kann ohne Änderung des Drehsinns des speisenden Netzes eine Drehrichtungsumkehr der angeschlossenen Asynchronmaschine erreicht werden. Weiterhin ist aus der US 4 481 456 A bekannt, insgesamt neun Paare antiparalleler Thyristoren derart einzusetzen, dass jeder Außenleiter des speisenden Netzes mit jedem Anschluss der dreiphasigen Asynchronmaschine über ein Paar der Thyristoren verbunden werden kann.

Mit dieser Anordnung wird ein sogenannter Matrix-Direkt-Umrichter realisiert.

Daneben sind aus der EP 0 408 045 B1 und der EP 0 512 372 A2 Verfahren und eine zugehörige Vorrichtungen zur Motorkontrolle bekannt, bei denen ein Pulsmuster angegeben wird, mit denen Grundwellen solcher Frequenz erzeugt werden können, die 1/(6n+1) der Netzfrequenz des speisenden Netzes entspricht, wobei n eine natürliche Zahl ist. Hier sind also Grundwellen erzeugbar, deren Frequenz 1/7, 1/13, 1/19 etc. der Netzfrequenz entsprechen. Eine Möglichkeit zur Drehrichtungsumkehr ist hiermit allerdings nicht verbunden. Schließlich ist aus der DE 25 58 113 A1 bereits der Vorschlag bekannt, 1/(6n+1) der Netzfrequenz durch gezielte Impulse zu erzeugen. Hier werden zur Drehrichtungsumkehr entweder zwei weitere Paare antiparalleler Thyristoren oder mechanische Umschalteinrichtungen benötigt.

Ausgehend vom Stand der Technik ist es Aufgabe der Erfindung, ein Verfahren anzugeben, mit dem geeignete Zündzeitpunkte eines Drehstromstellers zum Betrieb eines Asynchronmotors aufgefunden werden können. Dabei soll ohne zusätzlichen Aufwand an leistungselektronischen Bauelementen, insbesondere Stromrichterventilen, und zusätzlichen Schaltelementen allein mittels eines Drehstromstellers mit drei oder zwei Paaren antiparalleler Thyristoren ein Betrieb einer Asynchronmaschine mit beliebigen Grundwellen erzeugt werden. Insbesondere soll die Grundwelle 1/k der Netzfrequenz entsprechen, wobei k eine Zahl ≥ 3 ist. Weiterhin soll gleichzeitig eine beliebige Drehrichtung möglich sein.

Die Aufgabe wird erfindungsgemäß durch die Abfolge der Verfahrensschritte gemäß Patentanspruch 1 gelöst. Weiterbildungen sind in den abhängigen Ansprüchen angegeben. Eine zugehörige Einrichtung zur Steuerung eines Asynchronmotors entsprechend dem erfindungsgemäßen Verfahren ist im Patentanspruch 10 angegeben.

Bei der Erfindung werden zunächst alle potentiell möglichen Zündimpulse bestimmt, die sich zum Nulldurchgang der verketteten Spannung abzüglich eines Winkels ϕ ergeben. Für die Zündung des Thyristorpaares im Außenleiter A ergeben sich beispielsweise dann potentielle Zündimpulse, wenn sich die Phasenlage des speisenden Netzes um den Winkel ϕ vor dem Nulldurchgang der verketteten Spannung (U_{AB}) oder der verketteten Spannung (U_{CA}) befindet. Der Winkel ϕ liegt dabei betragsmäßig vorzugsweise zwischen 30 und 60°.

Beim erfindungsgemäßen Verfahren werden zunächst für alle drei Außenleiter die Grundwellen definiert, die der gewünschten Drehzahl und Drehrichtung des Motors entsprechen. Insbesondere bei einem Drehstromsteller, der drei Paare antiparalleler Thyristoren enthält, werden dann paarweise nur die potentiellen Zündimpulse genutzt und damit jeweils zwei Thyristorpaare gezündet, deren resultierender Stromfluss eine der definierten Grundwellen entsprechende Polarität besitzt. Ganz entsprechend werden bei einem Drehstromsteller, der nur zwei Paare antiparalleler Thyristoren enthält, bei dem also nur in zwei Außenleitern Thyristoren eingesetzt und der dritte Außenleiter überbrückt ist, darüber hinaus diejenigen Zündpulspaare ausgeschlossen, die einen Stromfluss ausschließlich zwischen den nicht überbrückten Außenleitern verursachen. Somit wird ein unkontrollierbarer Strom im überbrückten Außenleiter, dessen Polarität nicht der der definierten Grundwelle entspricht, vermieden.

Bei der Erfindung ist besonders vorteilhaft, dass beliebige Drehzahlen mit 1/k der Nenndrehzahl erzeugt werden können, wobei k eine Zahl ≥ 3 ist. Vorteilhaft ist weiterhin, dass allein durch Variation des Winkels ϕ das mit der Frequenz der definierten Grundwelle abgegebene Drehmoment beeinflusst werden kann.

Das beschriebene Verfahren wird insbesondere softwaremäßig realisiert. Es kann daher einfach in bestehenden Drehstromsteller ohne zusätzlichen Aufwand an Bauelementen implementiert werden.

Weitere Einzelheiten und Vorteile der Erfindung ergeben sich aus der nachfolgenden Figurenbeschreibung eines Ausführungs beispiels anhand der Zeichnung in Verbindung mit weiteren Unteransprüchen. Es zeigen
- Figur 1: eine Einrichtung zur Steuerung eines Asynchronmotors mit Anwendung des erfindungsgemäßen Verfahrens,
- Figur 2: Diagramme zur Verdeutlichung des Verfahrens bei rechtsdrehendem Motor,
- Figur 3: einen Ausschnitt aus Figur 2 zur Verdeutlichung des Einflusses des Zündwinkels,
- Figur 4: ein Diagramm zur Verdeutlichung des Verfahrens bei linksdrehendem Motor,
- Figur 5: eine Einrichtung entsprechend Figur 1 speziell zur zweiphasigen Ansteuerung eines Motors,
- Figur 6: ein Diagramm des Verfahrens mit zwei Paaren antiparalleler Thyristoren und
- Figur 7: und Figur 8 Flussdiagramme zur softwaremäßigen Ermittlung der Zündzeitpunkte für die einzelnen Phasen.

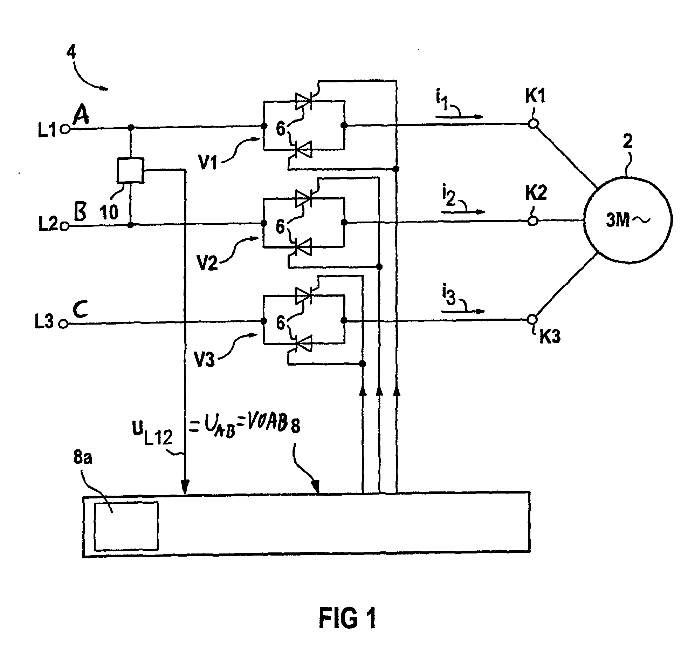

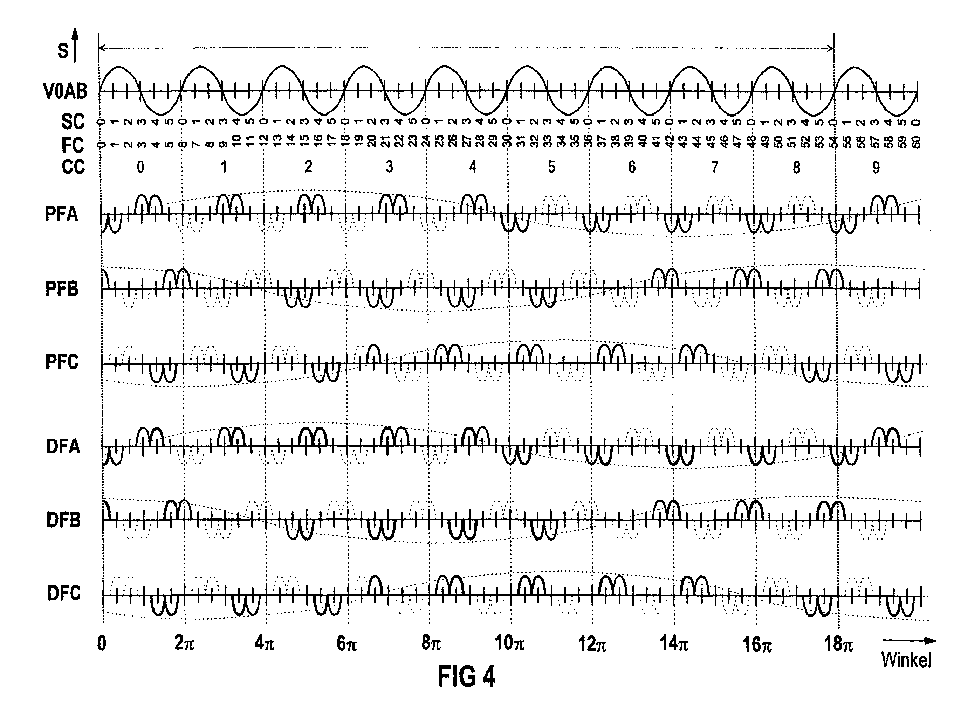

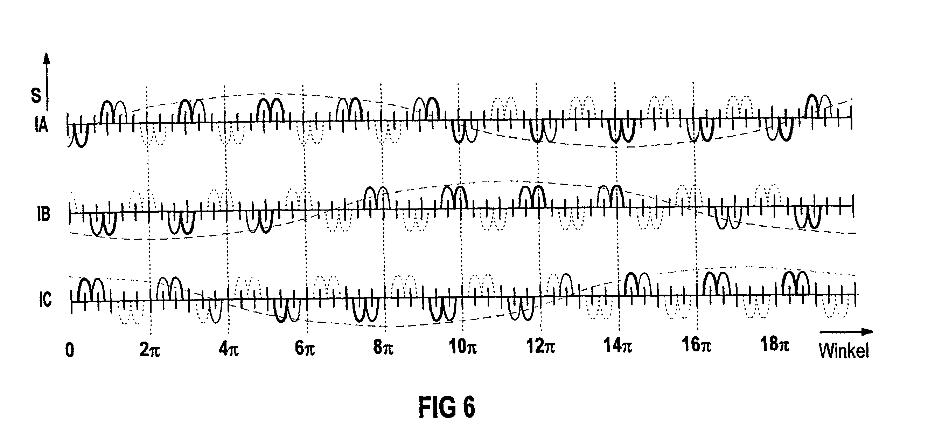

In Figur 1 und Figur 5 ist jeweils eine Induktionsmaschine 2, beispielsweise eine Drehstrom-Asynchronmaschine, über einen dreiphasigen Wechselstromsteller 4 als sogenannter Drehstromsteller an die Phasen des Netzes angeschlossen. Letzteres sind in Figur 1 die Phasen A, B und C eines dreiphasigen Netzes und in Figur 4 die Phasen A und B eines zweiphasigen Netzes.

Jeder der Phasen ist eine Ventilanordnung zugeordnet, beispielsweise in Figur 1 jeder Phase A, B und C eine Ventilanordnung V1, V2, V3, und in Figur 5 der Phase A und B eine Ventilanordnung V1 und V2. Die Ventilanordnungen bestehen aus jeweils zwei antiparallel geschalteten Thyristoren 6. Die Zündelektroden der Thyristoren 6 sind an eine Steuereinrichtung angeschlossen, mit der die zum Zünden der Thyristoren 6 erforderlichen Zündsignale in einer vorgegebenen zeitlichen Abfolge bereitgestellt werden.

Zwischen zwei Außenleitern des Netzes, beispielsweise zwischen den Klemmen A und B des Netzes in Figur 1, ist eine Spannungsmesseinrichtung 10 geschaltet, an deren Ausgang die zwischen diesen beiden Klemmen A und B auftretenden Netzspannung U_{AB} bereitsteht. Weiterhin ist eine Steuereinrichtung 8 zur Steuerung des Phasenanschnittswinkels zwecks Sanftauslauf des Motors vorhanden. Eine solche Steuereinrichtung wird vorzugsweise durch einen Mikrocontroller realisiert.

In vorliegendem Fall dient die Steuereinrichtung 8 dazu, ein geeignetes Programm zu bearbeiten, mit dem rein softwaremäßig der Betrieb der Einrichtung erfolgen kann. Dabei liegt ein einheitliches Verfahren zugrunde, mit dem beliebige Teile der Nenndrehzahl (> = 3)bei beliebiger Motordrehrichtung für zwei- und dreiphasige Sanftstarter erreicht werden können. Die Steuereinrichtung kann auch ein bereits für den Motor vorhandener Mikrocontroller sein.

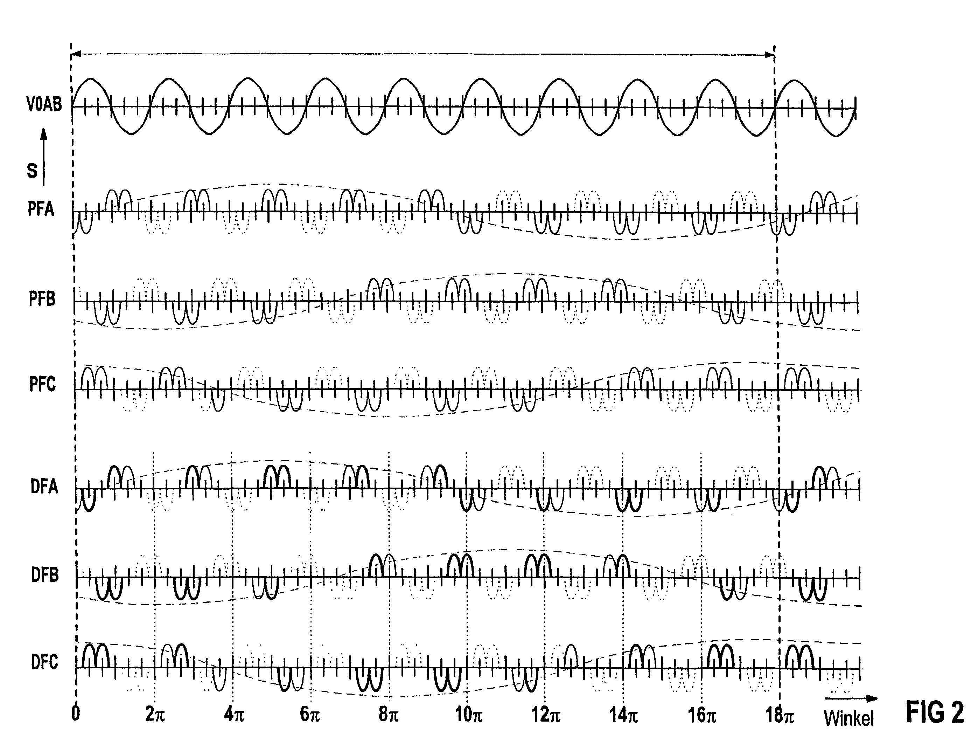

In den Figuren 2 und 4 sind die einzelnen Signale s bei einer Drehzahl von 1/9 der Nenndrehzahl dargestellt. Speziell Figur 2 gibt die Situation bei rechtsdrehendem Motor und speziell Figur 4 die Situation bei linksdrehendem Motor wieder.

In den graphischen Darstellungen haben die Signale folgende Bedeutung:
- VAB = Spannung der Phase A-B aus Figur 1. Das Signal wird als Referenz für die berechneten Zeitpunkte zur Zündung der Thyristoren verwendet.
- IA = Strom in der Phase A bei einer Zündung von 30° vor dem Nulldurchgang der verketteten Spannung.
   Da immer ein Strom in zwei Phasen fließen muss, gibt es zu jedem Stromimpuls in einer Phase einen Strom mit entgegengesetzter Polarität in einer anderen Phase, welche mit IB und IC bezeichnet sind. Die Grundwelle des Stromes bei 1/k der Nenndrehzahl wird für die einzelnen Phasen mit FA, FB und FC bezeichnet. Aus der Grundwelle lassen sich jeweils potentielle Zündzeitpunkte PFA, PFB und PFC ableiten. Die endgültigen Zündzeitpunkte sind mit DFA, DFB und DFC bezeichnet.

Zur Generierung der Zündzeitpunkte wird in einzelnen Schritten vorangegangen: Zunächst wird für die Phase A eine Grundwelle mit der gewünschten Frequenz entsprechend 1/k der Motorendrehzahl definiert. Die Phasenverschiebung ist dabei nicht wesentlich. Bei Rechtsdrehsinn wird für die Phase B eine Grundwelle definiert, welche die gleiche Frequenz wie die der Phase A hat, zu dieser aber 120° - bezogen auf die geteilte Frequenz - zeitverzögert ist. Für die Phase C gilt das gleiche wie für die Phase A, wobei hier die Verschiebung 240° besteht.

Im zweiten Schritt werden für jede Phase die Zündzeitpunkte markiert, deren dazugehöriger Strom die gleiche Polarität wie die jeweilige Grundwelle hat. Im darauffolgenden Schritt können von den potentiellen Zündzeitpunkten für jede Phase diejenigen verwendet werden, zu denen es einen potentiellen Zündzeitpunkt in einer der beiden anderen Phasen gibt. Diese Zündzeitpunkte werden als tatsächliche Zündzeitpunkte zum Betrieb des Drehstromstellers verwendet.

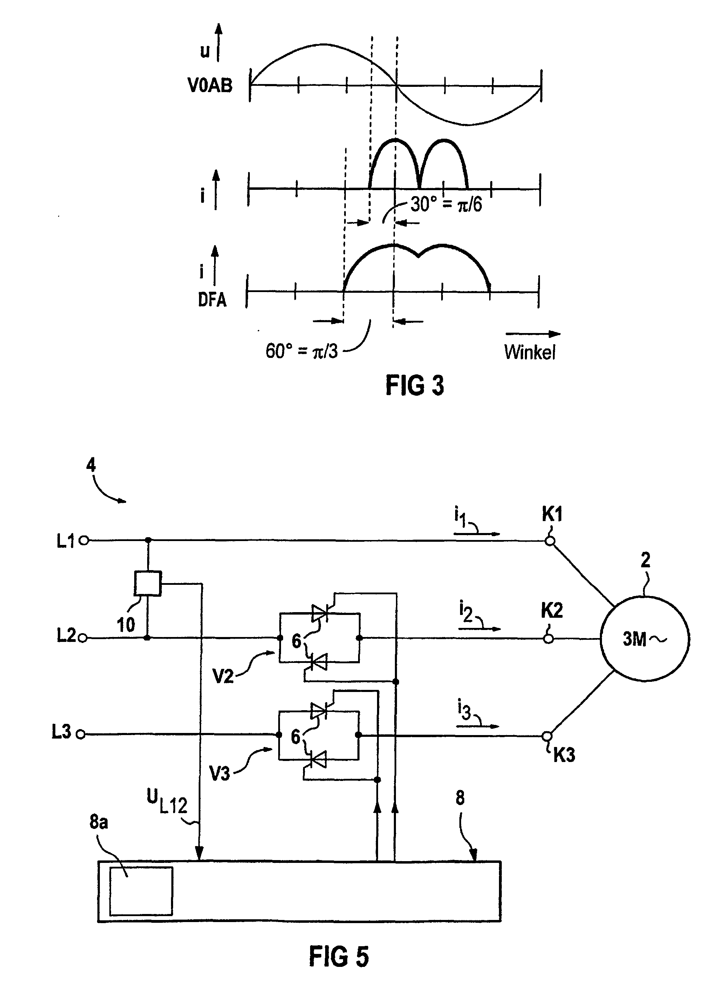

In Figur 3 ist dargestellt, wie der Zündwinkel ϕ das Drehmoment des Asynchronmotors bestimmt. Bei beliebigen Teilern der Nenndrehzahl kann der Zündwinkel ϕ > 0 vorzugsweise zwischen 30 und 60° verstellt werden, womit sich ein voreinstellbares Drehmoment ergibt.

Um eine Drehbewegung des Motors in inverse Richtung zu erreichen, wird gemäß dem anhand Figur 2 beschriebenen Verfahren die Lage der Grundwellen der Außenleiter B und C vertauscht. Die Auswahl und Bestimmung der Zündzeitpunkte verläuft ansonsten in identischer Weise wie in Figur 2, was anhand der Figur 4 wiedergegeben ist.

In Figur 5 ist ein Stator für ein zweiphasiges Netz mit zwei Paaren antiparalleler Thyristoren 6 ausgebildet, wobei der dritte Außenleiter permanent gebrückt ist. Wenn die beiden Thyristorpaare angesteuert werden, würde auch in diesem Außenleiter ein Strom fließen. Aus diesem Grund werden diejenigen Zündimpulse entfernt, die nur die beiden mit Thyristoren bestückten Außenleiter betreffen.

Letzteres ist anhand der Figur 6 dargestellt, bei der wiederum von 1/9 der Nenndrehzahl ausgegangen wird. Für den Fall, dass die Phase A gebrückt ist, werden die Zündimpulse, die nur die Außenleiter B und C betreffen, entfernt.

Mit der Steuereinrichtung 8 aus Figur 1 und Figur 5 erfolgt zu geeigneten Zeitpunkten die Ansteuerung der jeweiligen Thyristoren zur Einstellung einer vorgegebenen Drehzahl. Dazu umfasst die Steuereinrichtung 8 eine Recheneinheit, die nachfolgend auch mit 8a bezeichnet wird und ein bei einem zeitgemäßen Drehstromsteller üblicherweise vorhandener Mikrocontoller MC sein kann, zur softwaremäßigen Bestimmung der Zündzeitpunkte. Es wird dabei auf das Diagramm der Figur 4 Bezug genommen, bei der eine komplette Periode aus neun Einzelperioden dargestellt ist. Es sind Zähler SC, FC und CC vorhanden, welche die einzelnen Zeitpunkte aufzählen.

Jede einzelne Netzperiode wird in 60-Grad-Abschnitten unterteilt. Diese werden mit dem Zähler SC durchgezählt. Der Zähler FC zählt die 60-Grad-Abschnitte innerhalb einer Grundwellen Periode. Mit dem Zähler CC werden die Netzperioden innerhalb einer Grundwellenperiode gezählt.

Bei jedem 60-Grad-Abschnitt werden 2 Funktionen benutzt, welche die Polarität des Stromes in der jeweiligen Phase und die der Grundwelle berechnen.

In der nachfolgenden Tabelle ist die Ermittlung der Polarität der Stromes (Function signOfCurrent) dargestellt:
- Ergebnis:: -1 Vorzeichen negativ
0 Null
1 Vorzeichen positiv

| **CC** | **0** | **1** | **2** | **3** | **4** | **5** |
|---|---|---|---|---|---|---|
| **Phase** | | | | | | |
| **A** | **-1** | **-1** | **0** | **1** | **1** | **0** |
| **B** | **1** | **0** | **-1** | **-1** | **0** | **1** |
| **C** | **0** | **1** | **1** | **0** | **-1** | **-1** |

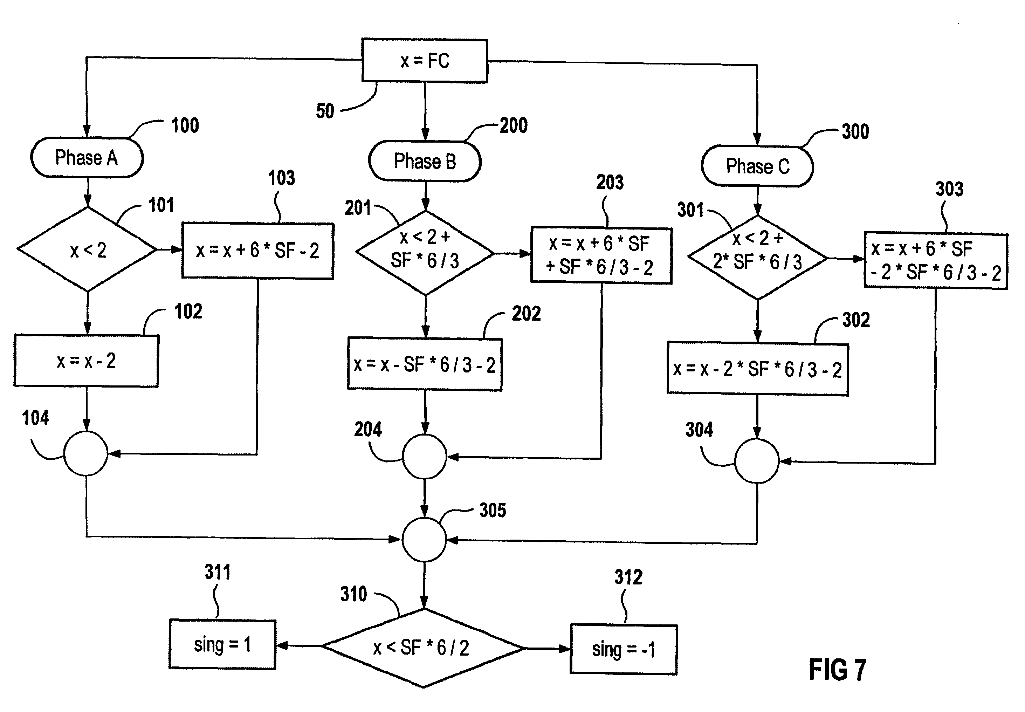

Anhand Figur 7 wird die Ermittlung der Polarität der Grundwelle verdeutlicht, wobei ein Geschwindigkeitsfaktor (Speedfactor)SF = 9 benutzt wird: In Position 50 wird von einem Zählwert x = FC ausgegangen, der 60°-Abschnitten innerhalb einer Grundwellenperiode entspricht. Mit 100 ist die Phase A, mit 200 die Phase B und mit 300 die Phase C bezeichnet. In den Entscheidungsgliedern 101, 201 und 301 wird geprüft, welchen Wert die Größe x hat. Ist der Wert erfüllt, wird an den Positionen 102, 202 und 302 ein entsprechender Wert bezogen auf den Ausgangswert FC angegeben. Im anderen Fall wird an der Position 103, 203 und 303 ein um die Geschwindigkeit 6 x SF erhöhter Wert ausgegeben. In den einzelnen Phasen erfolgt jeweils eine entsprechende Verschiebung. In den Positionen 104, 204 und 304 werden die Werte überlagert und das Summensignal auf die Position 305 gegeben. Bei 310 wird über den Geschwindigkeitswert entschieden und anhand der Vorzeichen die Polarität der Ströme ausgegeben.

Für das Zünden der Thyristoren 6 wird derart vorgegangen, dass obige Prozedur alle 60 Grad bezogen auf VAB aufgerufen wird. Der exakte Aufrufzeitpunkt liegt um eine einstellbare Zeit vor der 60-Grad-Marke. Die Größe dieses zeitlichen Abstandes bestimmt die an den Motor zugeführte Leistung und damit das vom Motor entwickelte Drehmoment. Anhand von CC, SC damit das vom Motor entwickelte Drehmoment. Anhand von CC, SC und FC wird für jedes Phasenpaar entschieden, ob eine Zündung in den jeweiligen Phasen erfolgen soll.

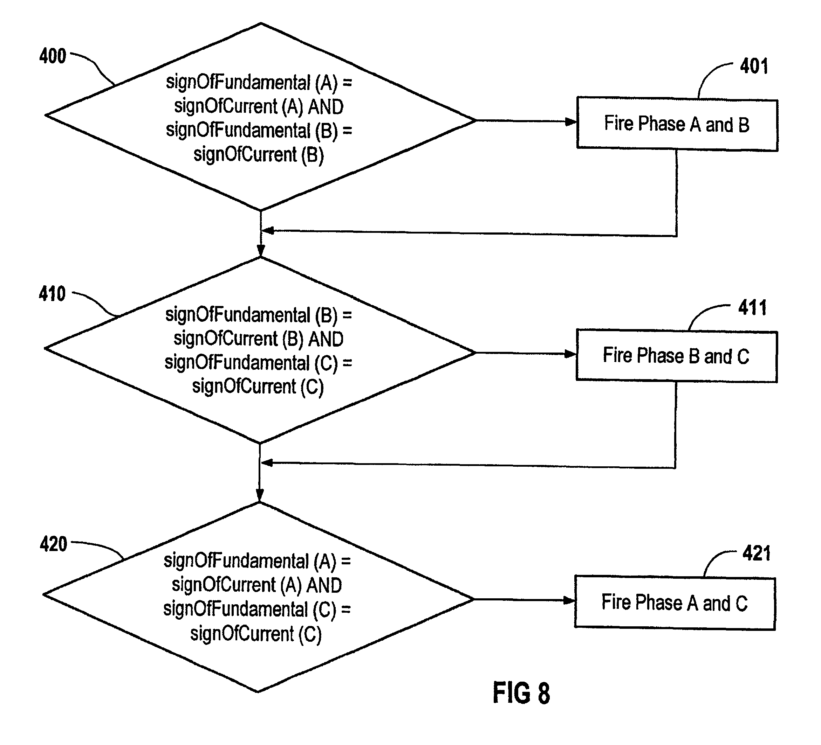

In Figur 8 wird anhand der Entscheidungsrauten in Abhängigkeit von den Vorzeichen der einzelnen Phasen entschieden, welche Thyristoren zünden sollen. Position 400 bezieht sich auf die Phasen A und B, Position 410 auf die Phasen B und C und Position 420 auf die Phasen A und C. In Abhängigkeit von den festgestellten Vorzeichen anhand Figur 7 wird in den Positionen 401, 411 und 421 jeweils das Signal für ein geeignetes Zünden der den einzelnen Phasen zugeordneten Thyristoren gegeben.

Bei den Beispielen gemäß den Figuren wird davon ausgegangen, dass die Zündung 30° vor dem Nulldurchgang der jeweils verketteten Spannung liegt. Um das Motormoment zu erhöhen, kann die Zündung vorgezogen werden, womit für jede Zündung eine längere Stromflusszeit erreicht wird. Die Zündung kann vorzugsweise 30 bis 60° vor dem Nulldurchgang der verketteten Spannung erfolgen.

## Patentansprüche

1. Verfahren zum Auffinden von Zündzeitpunkten von zwei- oder dreiphasigen Drehstromstellern zum Betrieb von Asynchronmotoren, wobei die Drehstromsteller ohne Verbindung der Sternpunkte von Ständerwicklung des Asynchronmotors und speisenden Netzes an ein Drehstromnetz angeschlossen sind und die wenigstens zwei Paare antiparallel geschalteter Thyristoren umfassen, die zu vorbestimmbaren Zeitpunkten gezündet werden, mit folgenden Verfahrensschritten:
- zunächst werden für die Paare antiparalleler Thyristoren potenzielle Zündimpulse, die mit einem bestimmten Zündwinkel (ϕ) vor dem jeweiligen Nulldurchgang der Netzspannung liegen, definiert,
- weiterhin wird eine sinusförmige Grundwelle einer Frequenz definiert, welche der gewünschten Drehzahl des Motors entspricht und die eine geringere Frequenz als die Netzspannung aufweist,
- anschließend werden zwei weitere, phasenverschobene Grundwellen der gleichen Frequenz definiert, die zur ersten Grundwelle jeweils phasenverschoben sind,
- für jede Phase werden die zuvor markierten, potenziellen Zündzeitpunkte verworfen, welche einen Strom entgegengesetzter Polarität wie die jeweilige zugeordnete Grundwelle verursachen würden,
- von den verbleibenden potenziellen Zündzeitpunkten werden für jede Phase diejenigen Zeitpunkte zur Zündung ausgewählt, zu denen in einer der beiden anderen Phasen ebenfalls ein Zündzeitpunkt existiert,
- die so ermittelten Zündzeitpunkte werden als tatsächliche Zündzeitpunkte für die Thyristoren der Drehstromsteller verwendet.

2. Verfahren nach Anspruch 1, **dadurch gekennzeichnet, dass** bei Rechtsdrehsinn für die zweite Phase eine Grundwelle definiert wird, welche die gleiche Frequenz wie die erste Phase hat, zu dieser aber um 120° zeitverzögert ist und für die dritte Phase eine Grundwelle definiert wird, die der ersten Phase entspricht, zu dieser aber um 240° zeitverzögert ist.

3. Verfahren nach Anspruch 1, **dadurch gekennzeichnet, dass** bei Linkdrehsinn für die zweite Phase eine Grundwelle definiert wird, die die gleiche Frequenz wie die erste Phase hat, zu dieser aber um 240° zeitverzögert und für die dritte Phase eine Grundwelle definiert wird, die der ersten Phase entspricht, zu dieser aber um 120° zeitverzögert ist.

4. Verfahren nach Anspruch 1, **dadurch gekennzeichnet, dass** die Frequenz der Grundwelle 1/k der Motornenndrehzahl beträgt, wobei k ≥ 3 ist.

5. Verfahren nach Anspruch 1, **dadurch gekennzeichnet, dass** beliebige Teiler der Nenndrehzahl mit (k ≥ 3) bei beliebiger Motordrehrichtung generiert werden.

6. Verfahren nach einem der vorhergehenden Ansprüche, **dadurch gekennzeichnet, dass** das Drehmoment bei den beliebigen Teilern k ≥ 3 der Nenndrehzahl durch den Zündwinkel (ϕ) beeinflusst wird.

7. Verfahren nach Anspruch 6, **dadurch gekennzeichnet, dass** der Zündwinkel (ϕ) zwischen 30° und 60° liegt.

8. Verfahren nach einem der vorhergehenden Ansprüche, **dadurch gekennzeichnet, dass** die Generierung der Grundwellen und die Auswahl der Zündzeitpunkte softwaremäßig ermittelt werden.

9. Verfahren nach Anspruch 8, **dadurch gekennzeichnet, dass** die Generierung der Grundwellen und die Auswahl des Zündzeitpunkts im Steuergerät des Asynchronmotors vorhandenen Mikrocontroller (µC) durchgeführt wird.

10. Einrichtung zum Auffinden von Zündzeitpunkten von zweioder dreiphasigen Drehstromstellern zum Betrieb eines Asynchronmotors, insbesondere zum An- und Auslauf des Asynchronmotors, mit einem Drehstromsteller zur Betriebssteuerung des Asynchronmotors, mit wenigstens zwei Paar antiparallel geschalteten, jeweils selektiv zündbaren Thyristoren, unter Anwendung des Verfahrens nach Anspruch 1 oder einem der Ansprüche 2 bis 9, **gekennzeichnet durch** eine Recheneinheit (8a) zur softwaremäßen Bestimmung und Auswahl der Zündzeitpunkte der Thyristoren (6), die folgende Mittel aufweist:
- Zähler (SC, FC, CC) zum Aufzählen von 60°-Abschnitten von Grundwellen zu den einzelnen Phasen,
- Mitteln zum Ermitteln der Polarität des Stromes an den aufgezählten Zeitpunkten,
- Entscheidungsmitteln zum Festlegen von Zündzeitpunkten für die einzelnen Thyristoren.

11. Einrichtung nach Anspruch 10, **dadurch gekennzeichnet, dass** die Recheneinheit (8a) der beim Motor (2) vorhandene Mikrocontroller (µC) ist.

12. Einrichtung nach Anspruch 10, **dadurch gekennzeichnet, dass** die Recheneinheit (8a) Teil einer Steuereinrichtung (8) als Drehstromsteller ist.

13. Einrichtung nach Anspruch 12, **dadurch gekennzeichnet, dass** die Recheneinheit (8a) ein Programm zur Bestimmung der Zündzeitpunkte erstellt.

14. Einrichtung nach Anspruch 13, **dadurch gekennzeichnet, dass** mit der Steuereinheit (8) die Ansteuerung der Thyristoren (6) zu den von der Recheneinheit (8a) ermittelten Zündzeitpunkten erfolgt.

## Claims

1. Method for finding triggering times of two- or three-phase power controllers for operating asynchronous motors, the three phase power controllers being connected to a three-phase network without connecting the star points of the stator winding of the asynchronous motor and the feeding network and comprising at least two pairs of antiparallel-connected thyristors, which are triggered at previously determinable times, having the following method steps:
- firstly, for the pairs of antiparallel thyristors, potential triggering pulses are defined which lie at a specific triggering angle (ϕ) before the respective zero crossing of the mains voltage,
- furthermore, a sinusoidal fundamental wave is defined at a frequency which corresponds to the desired rotational speed of the motor and whose frequency is lower than that of the mains voltage,
- then, two further, phase-shifted fundamental waves are defined at the same frequency, in each case being phase-shifted in relation to the first fundamental wave,
- for each phase, the previously marked potential triggering times which would cause a current of opposite polarity to that of the respectively associated fundamental wave are rejected,
- of the remaining potential triggering times, those times are selected for triggering each phase at which there is likewise a triggering time in one of the two other phases,
- the triggering times determined in this way are used as actual triggering times for the thyristors of the three-phase power controllers.

2. Method according to Claim 1, **characterized in that** in the case of clockwise rotation, a fundamental wave is defined for the second phase which has the same frequency as the first phase, but is time-delayed in relation to the latter by 120°, and for the third phase a fundamental wave is defined which corresponds to that of the first phase but is time-delayed in relation to the latter by 240°.

3. Method according to Claim 1, **characterized in that** in the case of anticlockwise rotation, a fundamental wave is defined for the second phase which has the same frequency as the first phase but is time-delayed in relation to the latter by 240° and, for the third phase, a fundamental wave is defined which corresponds to that of the first phase but is time-delayed in relation to the latter by 120°.

4. Method according to Claim 1, **characterized in that** the frequency of the fundamental wave is 1/k of the nominal rotational speed of the motor, where k ≥ 3.

5. Method according to Claim 1, **characterized in that** any desired devisors of the nominal rotational speed with (k ≥ 3) are generated with any desired direction of rotation of the motor.

6. Method according to one of the preceding claims, **characterized in that** the torque in the case of the arbitrary devisors k ≥ 3 of the nominal rotational speed is influenced by the triggering angle (ϕ).

7. Method according to Claim 6, **characterized in that** the triggering angle (ϕ) lies between 30° and 60°.

8. Method according to one of the preceding claims, **characterized in that** the generation of the fundamental waves and the selection of the triggering times is determined by means of software.

9. Method according to Claim 8, **characterized in that** the generation of the fundamental waves and the selection of the triggering time are carried out in the microcontroller (µC) present in the controller of the asynchronous motor.

10. Device for finding triggering times of two- or three-phase power controllers for operating an asynchronous motor, in particular for starting and stopping the asynchronous motor, having a three-phase power controller for the operational control of the asynchronous motor, having atleast two pairs of antiparallel-connected, respectively selectively triggerable thyristors, by using the method according to Claim 1 or one of Claims 2 to 9, **characterized by** a computing unit (8a) for the determination and selection of triggering times of the thyristors (6) by means of software, which has the following means:
- Counters (SC, FC, CC) for counting 60°-sections of fundamental waves belonging to the individual phases,
means for determining the polarity of the current at the times listed,
decision means for defining the trigerring times for the individual thyristors

11. Device according to Claim 10, **characterized in that** the computing unit (8a) is the microcontroller (µC) present in the motor (2).

12. Device according to Claim 10, **characterized in that** the computing unit (8a) is part of a control device (8) as a three-phase power controller.

13. Device according to Claim 12, **characterized in that** the computing unit (8a) sets up a program for determining the triggering times.

14. Device according to Claim 13, **characterized in that** by using the control unit (8), the driving of the thyristors (6) is carried out at the triggering times determined by the computing unit (8a).

## Revendications

1. Procédé pour trouver des instants d'allumage de régulateurs de courant rotatoire biphasés ou triphasés afin de faire fonctionner des moteurs asynchrones, les régulateurs de courant rotatoire étant raccordés à un réseau triphasé sans liaison des points neutres de l'enroulement statorique du moteur asynchrone et du réseau d'alimentation et comportant au moins deux paires de thyristors branchés tète-bêche qui peuvent être allumés à des instants pouvant être prescrits, avec les étapes de procédé suivantes :
- on définit d'abord pour les paires de thyristors branchés tête-bêche des impulsions d'allumage potentielles qui se trouvent avec un certain angle d'allumage (ϕ) avant le passage par zéro respectif de la tension de réseau,
- on définit aussi une onde fondamentale sinusoïdale d'une fréquence qui correspond à la vitesse de rotation souhaitée du moteur et qui a une plus petite fréquence que la tension de réseau,
- on définit ensuite deux autres ondes fondamentales déphasées de même fréquence qui sont déphasées à chaque fois par rapport à la première onde fondamentale,
- pour chaque phase, on rejette les instants d'allumage potentiels, marqués auparavant, qui provoqueraient un courant de polarité opposée à celle de l'onde fondamentale associée respective,
- parmi les instants d'allumage potentiels restants, on sélectionne pour chaque phase les instants d'allumage auxquels il existe également un instant d'allumage dans l'une des deux autres phases,
- on utilise les instants d'allumage ainsi déterminés comme instants d'allumage réels pour les thyristors du régulateur de courant rotatoire.

2. Procédé selon la revendication 1, **caractérisé par le fait que**, en cas de rotation vers la droite, on définit pour la deuxième phase une onde fondamentale qui a la même fréquence que la première phase mais qui est retardée de 120° par rapport à celle-ci et on définit pour la troisième phase une onde fondamentale qui correspond à la première phase mais qui est retardée de 240° par rapport à celle-ci.

3. Procédé selon la revendication 1, **caractérisé par le fait que**, en cas de rotation vers la gauche, on définit pour la deuxième phase une onde fondamentale qui a la même fréquence que la première phase mais qui est retardée de 240° par rapport à celle-ci et on définit pour la troisième phase une onde fondamentale qui correspond à la première phase mais qui est retardée de 120° par rapport à celle-ci.

4. Procédé selon la revendication 1, **caractérisé par le fait que** la fréquence de l'onde fondamentale vaut 1/k de la vitesse de rotation nominale du moteur, avec k ≥ 3.

5. Procédé selon la revendication 1, **caractérisé par le fait qu'**on produit des fractions quelconques de la vitesse de rotation nominale avec (k ≥ 3) pour un sens de rotation de moteur quelconque.

6. Procédé selon l'une des revendications précédentes, **caractérisé par le fait que** le couple pour les fractions quelconques k ≥ 3 de la vitesse de rotation nominale est influencé par l'angle d'allumage (ϕ).

7. Procédé selon la revendication 6, **caractérisé par le fait que** l'angle d'allumage (ϕ) est compris entre 30° et 60°.

8. Procédé selon l'une des revendications précédentes, **caractérisé par le fait que** la génération des ondes fondamentales et la sélection des instants d'allumage s'effectuent par logiciel.

9. Procédé selon la revendication 8, **caractérisé par le fait que** la génération des ondes fondamentales et la sélection de l'instant d'allumage s'effectuent dans le microcontrôleur (µC) présent dans l'appareil de commande du moteur asynchrone.

10. Dispositif pour trouver des instants d'allumage de régulateurs de courant rotatoire biphasés ou triphasés afin de faire fonctionner des moteurs asynchrones, notamment en vue du démarrage et du ralentissement du moteur asynchrone, avec un régulateur de courant rotatoire pour commander le fonctionnement du moteur asynchrone, avec au moins deux paires de thyristors branchés tête-bêche et pouvant être allumés à chaque fois sélectivement, en utilisant le procédé selon la revendication 1 ou selon l'une des revendications 2 à 9, **caractérisé par** une unité de calcul (8a) qui est destinée à la détermination par logiciel et la sélection par logiciel des instants d'allumage des thyristors (6) et qui comporte les moyens suivants :
- des compteurs (SC, FC, CC) pour compter des sections de 60° d'ondes fondamentales pour les différentes phases,
- des moyens pour déterminer la polarité du courant aux instants comptés,
- des moyens de décision pour fixer des instants d'allumage pour les différents thyristors.

11. Dispositif selon la revendication 10, **caractérisé par le fait que** l'unité de calcul (8a) est le microcontrôleur (µC) présent au niveau du moteur (2).

12. Dispositif selon la revendication 10, **caractérisé par le fait que** l'unité de calcul (8a) fait partie d'un dispositif de commande (8) comme régulateur de courant rotatoire.

13. Dispositif selon la revendication 12, **caractérisé par le fait que** l'unité de calcul (8a) élabore un programme pour la détermination des instants d'allumage.

14. Dispositif selon la revendication 13, **caractérisé par le fait que**, avec l'unité de commande (8), la commande des thyristors (6) s'effectue aux instants d'allumage déterminés par l'unité de calcul (8a).
